# EUROPÄISCHE PATENTSCHRIFT

(11) **EP 1 235 094 B1**
(45) Veröffentlichungstag und Bekanntmachung des Hinweises auf die Patenterteilung: **19.04.2006**
(21) Anmeldenummer: 02100162.3
(22) Anmeldetag: 21.02.2002
(51) Int. Cl.: G02B 21/22, G02B 21/00

(54) **Erweiterte Blendensteuerung für Bildeinblendungen in einem Stereomikroskop**
Extended iris control for image blending in a stereomicroscope
Commande de diaphragme étendue pour l'incrustation des images dans un microscope stéréoscopique

(30) Priorität: 23.02.2001 DE 10108989; 23.02.2001 DE 10108988; 12.04.2001 DE 10118702; 12.04.2001 DE 10118703; 26.11.2001 DE 10157613
(43) Veröffentlichungstag der Anmeldung: 28.08.2002
(60) Teilanmeldung: 06001657.3
(73) Patentinhaber: Leica Microsystems (Schweiz) AG, 9435 Heerbrugg (CH)
(72) Erfinder: SPINK, Roger, 9442 Berneck (CH); DEVERIN, Jacques, Dr., 9443 Widnau (CH); MANNSS, Jürgen, 3672 Oberdiessbach (CH); MOSER, Benno, 9442 Berneck (CH)
(74) Vertreter: Rosenich, Paul

(56) Entgegenhaltungen:
- EP-A- 0 712 600
- EP-A- 0 928 981
- WO-A-00/68724
- DE-A- 3 432 635
- DE-A- 10 021 063
- PATENT ABSTRACTS OF JAPAN vol. 2000, no. 19, 5. Juni 2001 (2001-06-05) & JP 2001 046399 A (OLYMPUS OPTICAL CO LTD), 20. Februar 2001 (2001-02-20)

## Beschreibung

Die Erfindung betrifft eine Blendensteuerung für die Integration von Zusatzdaten in einen Beobachtungs-Strahlengang oder in mehrere Beobachtungs-Strahlengänge eines Stereomikroskops zur wahlweisen Abschaltung eines unerwünschten Beobachtungs-Bildkanals.

In modernen Operationsmikroskopen ist es üblich, Zusatzinformationen in eines der beiden Zwischenbilder einzublenden. Diese Bildinformationen werden entweder den originären optischen Bilddaten passgenau überlagert - z. B: korrelierte Daten, CT-, MRI-Konturen - oder ohne Bezug zur optischen Objektabbildung dargestellt (nicht-korrelierte Bilddaten, Standard-Schnitte, etc.), indem der betreffende Objektstrahlengang ausgeblendet wird. Oder sie werden in einem begrenzten Teilbereich überlagert (Monitoring-Kurven, Menüs etc.).

Im Fall der Abblendung des Objektlichts wird eine Blende zwischen Objektstrahlengang und den die Zusatzinformation einblendenden Strahlenteiler geschoben, sodass nur die zusätzlich eingeblendete Information sichtbar ist. Eine derartige Blendenanordnung ist aus der WO-A2-01/27659 bekannt, die am 19.4.2001 publiziert wurde. Diese bekannte Anordnung bot jedoch keine Möglichkeit, unter Ausnutzung des weiteren Strahlverlaufes mehrere Benutzer wahlweise die Zusatzinformation und/oder die Objektinformation betrachten lassen zu können. Aus der Fig. der WO-A2-01/27659 wird vielmehr deutlich, dass ein erster Assistent am Assistentenanschluss (11) lediglich das Objektbild, nicht jedoch das eingespiegelte Bild aus dem Display (1) sehen kann. Ein zweiter Assistent, der beispielsweise über ein Okular am zweiten Assistententubus (19) Einblick nimmt, sieht überhaupt lediglich einen Bildkanal - und zwar den rechten Hauptstrahlengang (18) - und kann somit wahlweise entweder das Objektbild oder überhaupt nichts sehen, wenn die dritte Blende (20) geschlossen ist; dies jeweils jedoch nicht unabhängig vom Hauptbeobachter am Okular (15), der im rechten Hauptstrahlengang (18) immer das gleiche Bild wie der zweite Assistent sieht. Dem konnte beim bekannten Stand der Technik nur dadurch abgeholfen werden, dass eine zusätzliche Einspiegelungsvorrichtung für den dritten Hauptstrahlengang vorgesehen worden ist, vgl. hierzu die Seite 4, Zeile 14, bis Seite 5, Zeile 19, der WO-A2-01/27659.

Aus dem angegebenen Grund mangelt es dem bekannten Stand der Technik an Flexibilität für die Steuerung der Beobachtungsmöglichkeken. Auch ist beim bekannten Stand der Technik eine Einschränkung insofern gegeben, als die Einspiegelung in beide Hauptstrahlengänge (4 und 18) - wie schon erwähnt - zwei Einspiegelungsvorrichtungen (1, 2, 3 usw.) erfordert, was zusätzliche Platz- und Baugrößenprobleme mit sich bringt.

Es ist weiterhin eine "Multivision" genannte Einrichtung von Zeiss bekannt, die es einem Assistenten erlaubt, das gleiche Bild wie ein Hauptbeobachter zu sehen, unabhängig davon, ob dieser ein Objektbild oder ein mit einem Zusatzbild überlagertes Objektbild sieht. Die Flexibilität bei der Beobachtungsmöglichkeit ist somit nachteiligerweise ebenfalls eingeschränkt.

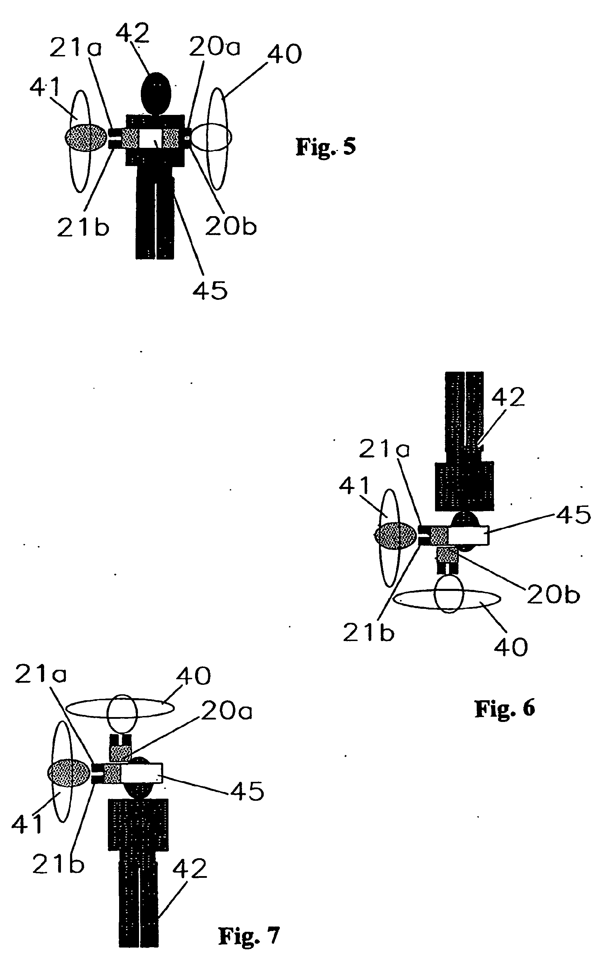

Bei Operationsmikroskopen sind grundsätzlich hinsichtlich ihrer Funktionen drei unterschiedliche Beobachtungs- beziehungsweise Anwendungsarten zu unterscheiden, wobei zur Erläuterung der folgenden Ausführungen auf die Fig. 5-7 verwiesen wird, die Mikroskopstellungen aus dem Stand der Technik wiedergeben. Bei diesen Figuren bedeuten dabei die Bezugszeichen figurenübergreifend schematisch dargestellte Personen beziehungsweise Gegenstände:

Patient (Objekt) 42, Optikträger (eines Operationsmikroskops) 45, Chirurg (Hauptbeobachter) 41, Assistent 40, Beobachtungsausgang (Hauptokular) linker Strahlengang 21a und rechter Strahlengang 21b, Beobachtungsausgang (Assistentenokular) für stereoskopische Beobachtung 20a und 20b (nur in Fig. 5) und für monokulare Beobachtung rechter Strahlengang 20b (Fig. 6) und linker Strahlengang 20a (Fig. 7).
(1) ein Chirurg (Hauptbeobachter), der grundsätzlich (fast ausschließlich) die Beobachtungsausgänge 21a und 21b stereoskopisch benutzt und im allgemeinen über Art und Zeitpunkt des Einspiegelns sowie über die Frage der Überlagerung oder Nichtüberlagerung der Zusatzinformation entscheidet;
(2a) ein Assistent, der fast ausschließlich entweder den rechten Beobachtungsausgang 20a - wie z.B. in Fig. 6 - oder den linken Beobachtungsstrahlengang 20b - wie z.B. in Fig. 7 - monoskopisch verwendet, wenn er im rechten Winkel zum Chirurgen 41 und dem Mikroskop steht (Craniotomie), oder
(2b) der Beobachtungsstrahlengang 20a und 20b wird stereoskopisch verwendet, wenn der Assistent 40 dem Chirurgen 41 gegenüber und hinter dem Mikroskop steht, wie in Fig. 5 dargestellt (spinale Operationen);
(3) eine Beobachtergruppe befindet sich neben dem Mikroskop oder sogar außerhalb des Operationssaals, die im wesentlichen diejenigen Informationen auf einem Monitor im oder außerhalb des Operationssaals sehen sollte, die der Chirurg (Hauptbeobachter) 41 wahrnimmt und somit gar nicht selbst durch das Mikroskop blickt, sondem die Beobachtung über die Betrachtung einer Videoaufnahme durchführt.

Im "Beobachter"-Fall (1) stehen dem Chirurgen 41 bei stereoskopischem Einblick in die beiden Okulare aufgrund der Zusatzinformation in einem einzigen Bildkanal - insbesondere bei Datensubstitution durch das Einblenden z.B. von Video-Daten in diesen Bildkanal - zwei unterschiedliche BildInformationen im Vergleich mit dem zweiten Bildkanal zur Verfügung, die ihn irritieren können.

Es ist daher die Aufgabe der vorliegenden Erfindung, die erwähnten Nachteile zu beseitigen und die Flexibilität der Beobachtungsmöglichkeiten zu erhöhen und dies auch ohne zusätzliche Einspiegelungsvorrichtungen - d.h. ohne zusätzliche Strahlengänge und baugruppen-vergößemde Maßnahmen - zu realisieren.

Gelöst wird diese Aufgabe durch die Merkmale des Patentanspruchs 1. Weitere Ausgestaltungen ergeben sich aus den Unteransprüchen. Durch den erfindungsgemäßen Einsatz zusätzlicher Blenden und in einem weiteren Schritt durch eine neuartige Blendensteuerung wird dem Chirurgen das Abschalten der im Moment nicht gewünschten Objektinformation beziehungsweise ein Management der den jeweiligen (Haupt- und/oder Assistenten-) Beobachtern zur Verfügung gestellten Bildinformationen ermöglicht.

Die gewünschte Flexibilität wird erreicht, indem in wenigstens einem Hauptstrahlengang wenigstens eine zweite schaltbare Blende zwischen dem Ausspiegelungs-Strahlenteiler und dem Haupt-Beobachtungsausgang angeordnet ist, und indem in jedem Hauptstrahlengang ein Einspiegelungs-Strahlenteiler angeordnet ist. So kann flexibel für mehrere Assistenten und den Hauptbeobachter wahlweise Bildinformation zur Verfügung gestellt werden, zum Teil unabhängig von dem, was dem Hauptbeobachter geliefert wird.

Dies ist dann optimiert, wenn zwischen jedem Einspiegelungs-Strahlenteiler und dem Hauptobjektiv und jedem Ausspiegelungs-Strahlenteiler und dem Haupt-Beobachtungsausgang je eine schaltbare erste beziehungsweise zweite Blende angeordnet sind. Unter einer "schaltbaren Blende" wird erfindungsgemäß jede Blendeneinrichtung verstanden, die einen Strahlengang öffnet oder schliesst. Damit sind sowohl mechanische als auch opto-elektronische Blenden oder dergleichen umfasst.

Eine weitere Flexibilisierung und Verbesserung der Anwendbarkeit sowie der Reduktion von unnötigen Liditverlusten kann bei einem erfindungsgemäßen Stereomikroskop mit wenigstens einem Neben-Beobachtungsausgang (Assistentenausgang) erreicht werden, wenn auch zwischen wenigstens einem Ausspiegelungs-Strahlenteiler und dem Neben-Beobachtungsausgang eine dritte schaltbare Blende (19a, 19b) angeordnet ist, was wiederum optimiert wird, wenn vor jedem Neben-Beobachtungsausgang eine dritte schaltbare Blende (19a, 19b) angeordnet ist.

Vor allem bei Stereomikroskopen, bei denen pro Hauptstrahlengang wenigstens zwei Neben-Beobachtungsausgänge vorgesehen sind - also bei besonders flexibel einsetzbaren Operationsmikroskopen - ist es vorteilhaft, wenn diese Beobachtungsausgänge in der gleichen Radialebene in Bezug auf den Hauptstrahlengang liegen - also z.B. ein Ausgang seitlich des Ausspiegelungs-Strahlenteilers und ein Ausgang hinter dem Ausspiegelungs-Strahlenteiler (d.h. um 90° versetzt) - und dass der Ausspiegelungs-Strahlenteiler drehbar ist, so dass er die Ausspiegelungs-Bildinformation wahlweise dem einen oder anderen Neben-Beobachtungsausgang zuführt.

Da dies zu einer Bilddrehung führt, soll oder kann diese bei Bedarf in erfindungsgemäßer Weise elektronisch (im Videosignal) berücksichtigt und korrigiert werden. Die Detaillösung zu dieser erfindungsgemäßen Weiterbildung kann der EP 1237030 entnommen werden, auf die hiermit ausdrücklich rückverwiesen wird, um die Möglichkeiten einer optimierten Umschaltung zu verstehen.

Eine besonders kleine Baugröße ergibt sich bei einem erfindungsgemäßen Stereomikroskop, bei dem wenigstens einer der Einspiegelungs-Strahlenteiler gleichzeitig auch als Ausspiegelungs-Strahlenteiler - z.B. für Videobildsensoren oder auch andere Bildaufzeichnungsvorrichtungen - ausgebildet ist.

Eine besonders bevorzugte - weil platzsparende - Entwicklung ergibt sich, wenn beiden Einspiegelungs-Strahlenteilern in den beiden Hauptstrahlengängen ein gemeinsamer Einspiegelungs-Strahlengang zugeordnet ist, der wahlweise dem einen oder dem anderen oder aber beiden Einspiegelungs-Strahlenteilern zuschaltbar ist. Die Detaillösung zu dieser erfindungsgemäßen Weiterbildung kann der EP 1237031 entnommen werden, auf die hiermit ausdrücklich rückverwiesen wird, um die Möglichkeiten einer optimierten Umschaltung zu verstehen. Eine Variante ergibt sich, wenn der Einspiegelungs-Strahlengang ein Umlenkprisma, das vorzugsweise dreh- oder schwenkbar und derart wahlweise dem linken oder rechten Hauptstrahlengang zuordenbar ist, umfasst. Bei einer anderen Variante, wie in der zweiten Figur der EP 1237031 angegeben, ist das Umlenkprisma nicht zwischen den Einspiegelungs-Strahlenteilem, sondern dahinter angeordnet. Dadurch wird eine Bilddrehung vermieden.

Gemäß einer Weiterentwicklung der Erfindung ist wenigstens ein Teil der Blenden mit einer Steuereinrichtung verbunden, die im Betriebszustand wenigstens einen Teil der Blenden anhand von applikations- und/oder benutzerspezifischen Gesichtspunkten schließt oder öffnet. Somit kann z.B. ein Anwender sein persönliches Anwendungsprofil festlegen und dieses bei Bedarf jederzeit wieder abrufen, ohne neuerlich aufwändige Voreinstellungen vornehmen zu müssen.

Die Steueraufgaben werden erleichtert, wenn wenigstens ein Stellungs- oder Positionsdetektor vorgesehen ist, der im Betriebszustand die Stellung oder Position der Ausspiegelungsprismen und/oder des Umlenkprismas und/oder der Blenden erfasst und mit der Steuereinrichtung verbunden ist und die Blendensteuerung entsprechend ausrichtet, da so auch manuelle Override-Einstellungen berücksichtigt und Fehlschaltungen vermieden werden können.

Zur weiteren Optimierung und Vereinfachung ist vorgesehen, dass die Steuereinrichtung mit einer Steuerung für die eingespiegelte Zusatzinformation (Videocontroller) verbunden ist, um in Abhängigkeit von der jeweiligen Stellung der Ausspiegelungsprismen und/oder des Umlenkprismas und/oder der jeweiligen Blendenstellung und/oder der jeweiligen Beobachterwünsche das über ein Display eingespiegelte Bild zu beeinflussen, so dass der jeweilige Anwender automatisch die gewünschte beziehungsweise erforderliche Bildinformation erhält.

Die Steuereinrichtung umfasst beispielsweise wenigstens einen Blenden-Controller, wenigstens einen Controller mit Speicher für Datentyp-Information und Benutzer-Setup und/oder wenigstens eine Steuerung und Sensorik für die Position der Ausspiegelungs-Strahlenteiler und/oder des Umlenkprismas, wobei sie insbesondere automatisch und/oder manuell einstellbar ist.

Eine Erleichterung und Steigerung der Effizienz von IGS-Operationen ("IGS" = Image Guided Surgery) erhält man, wenn die Steuereinrichtung mit der Operationssteuerungseinrichtung (IGS) verbunden ist und im Betriebszustand wenigstens den Einblendzustand in den linken oder rechten Hauptstrahlengang signalisiert.

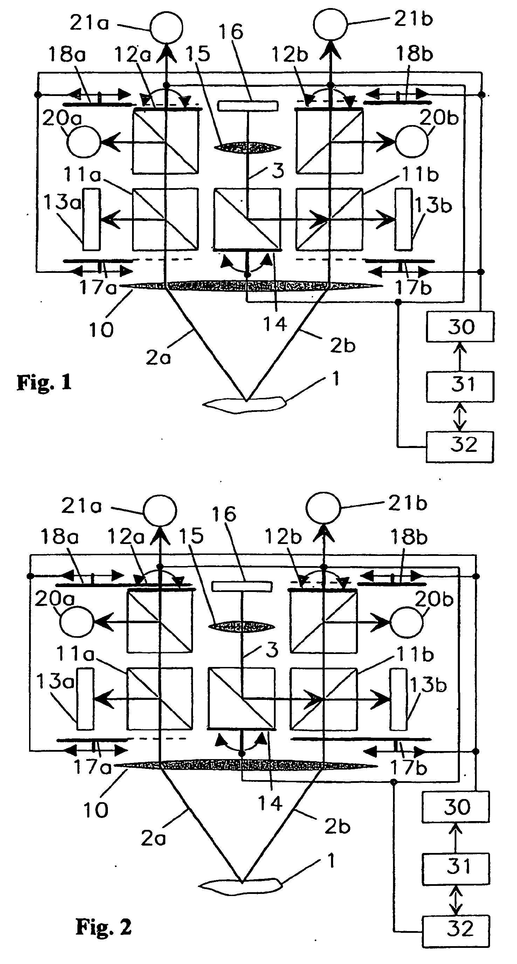

Zur weiteren Erläuterung wird auf die Zeichnung verwiesen, wobei in den Fig. 1-4 schematische Darstellungen unterschiedlicher Blendenpositionen enthalten sind. In den Fig. 5-7 sind die bekannten Positionierungs-Varianten des Chirurgen und des Assistenten bezüglich des zu beobachtenden Patienten dargestellt.

In Fig. 1 projiziert ein Display 16 entlang des Strahlengangs für die Zusatzinformation(en) 3 mittels einer Optik 15 und eines schaltbaren Prismas 14 (mögliche Projektion in den linken oder rechten Strahlengang) ein mit Zuatzinformationen versehenes Bild in den rechten Strahlengang 2b. Über den Strahlteiler 11b wird diese Information mit dem Bild des Objektes 1 überlagert und dem optionalen Bildsensor 13b und den weiteren Beobachtungsstrahlengängen zugeführt.

In den Fig. 1-4 ist eine Steuerleitung symbolisiert, die Blenden und Prismen steuert und/oder deren Position bzw. Stellung detektiert. An den Stellen, an denen neben einer möglichen Steuerung auch eine Positionsdetektion möglich ist, ist an der Steuerleitung ein Punkt eingezeichnet. Blenden in den stereoskopischen Strahlengängen können miteinander auch mechanisch gekoppelt sein, wenn sie jeweils gemeinsam geschattet werden sollen.

Mittels der Blenden 18a und 18b kann sich der Beobachter - falls gewünscht - nur auf die Zusatzinformation konzentrieren. In Fig.2 wird die Zusatzinformation auf den rechten Beobachtungsstrahlengang geschattet, die geschlossene Blende 18a lässt somit für den Chirurgen 41 nur die Sicht 21b auf die Zusatzinformation mit dem rechten Auge zu. Das linke Auge sieht nichts. Der Assistentenausgang kann ebenfalls geschaltet werden; entweder zu den beiden seitlichen monoskopischen Ausgängen, oder zum hinteren stereoskopischen Ausgang, je nach chirurgischer Applikation.

In cranieller Applikation sieht ein seitlich links angeordneter Assistent 40 über den Ausgang 20a die Objektinformation monoskopisch, nicht aber die Zusatzinformation; ein seitlich rechts angeordneter Assistent 40 nimmt monoskopisch über den Ausgang 20b - wie der Chirurg 41 - nur die Zusatzinformationen wahr. In spinaler Applikation nimmt der Assistent 40 beide Informationen stereoskopisch über die Ausgänge 20a und 20b wahr. Somit sieht er auch beide Informationen mit unterschiedlichem Gehalt.

Im Controller 31 können Vorlieben bestimmter Chirurgen gespeichert werden und im Applikationsfall abgerufen werden. Zum Beispiel möchte Chirurg A immer beide Informationen gleichzeitig sehen; die Blenden 18a und 18b bleiben in diesem Fall immer geöffnet. Der Chirurg B möchte aber beispielsweise ausschließlich die eingeblendete Information; je nach Schaltposition des Prismas 14 schließt der Blendencontroller 30 die Blende 18a oder 18b.

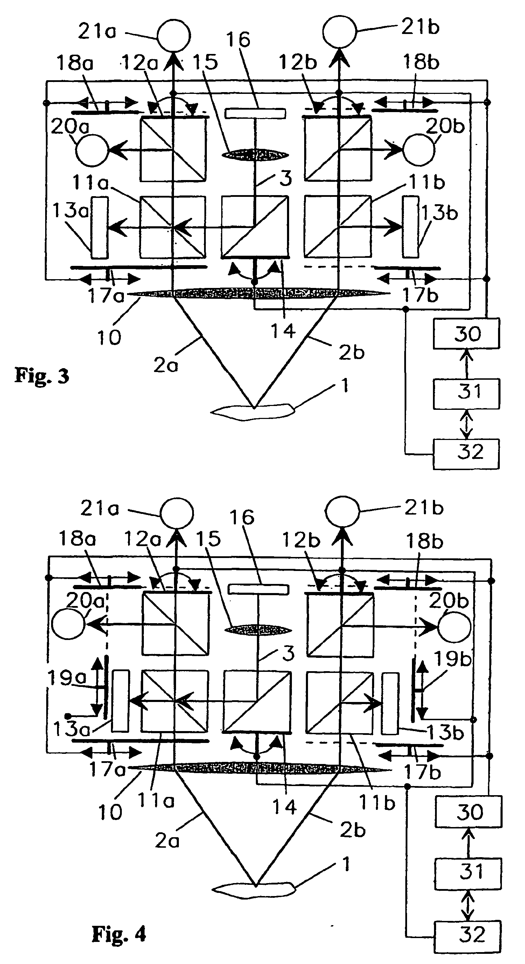

Fig. 3 zeigt die Einstellung mit eingeblendeten Zusatzinformationen im linken Strahlengang und geöffneten Blenden im chirurgischen Strahlengang 21a und 21b.

In Fig. 4 ist die Anordnung der Blenden für die Assistentenausgänge ersichtlich. Dies sind im wesentlichen die Blenden 19a und 19b, die sich im Falle eines rückwärtig positionierten Assistenten 40 (spinale Anordnung) schließen lassen.

Die Erfindung bietet folgende Vorteile:
- Sie ermöglicht das wahlweise Abschalten von zeitweise unerwünschter oder den Chirurgen 41 störender Objektinformation;
- der Assistent 40 kann in jeder Applikation mit einem Bild des Objektes 1 versorgt werden;
- ein angeschlossenes Kamerasystem kann das Objekt 1 immer detektieren;
- die Blendenfunktion adaptiert sich automatisch an die aktuelle oder sich ändemde Position der Zusatzinformation(en).

### Bezugszeichenllste

- 1: Objekt (Patient)
- 2a: Hauptstrahlengang = Objektstrahl, linker Strahlengang
- 2b: Hauptstrahlengang = Objektstrahl, rechter Strahlengang
- 3: Einspiegelungs-Strahlengang für Zusatzinformation(en)
- 10: Hauptobjektiv
- 11a: Einspiegelungs-Strahlenteiler linker Strahlengang, Video und Zusatzinformationen
- 11b: Einspiegelungs-Strahlenteiler rechter Strahlengang, Video und Zusatzinformationen
- 12a: Ausspiegelungs-Strahlenteiler linker Strahlengang, 1. und 2. Beobachter
- 12b: Aussplegelungs-Strahlenteiler rechter Strahlengang, 1. und 2. Beobachter
- 13a: Videobildsensor linker Strahlengang
- 13b: Videobildsensor rechter Strahlengang
- 14: (schaltbares) Umlenkprisma (Strahlengang Zusatzinformationen)
- 15: Abbildungsoptik für (16)
- 16: Display für Zusatzinformationen
- 17a: schaltbare erste Blende zum Ausblenden des Objektlichtes im linken Strahlengang
- 17b: schaltbare erste Blende zum Ausblenden des Objektlichtes im rechten Strahlengang
- 18a: schaltbare zweite Blende zum Ausblenden des Objektlichtes im linken Strahlengang
- 18b: schaltbare zweite Blende zum Ausblenden des Objektlichtes im rechten Strahlengang
- 19a: schaltbare dritte Blende zum Ausblenden des Objektlichtes im linken Assistentenstrahlengang
- 19b: schaltbare dritte Blende zum Ausblenden des Objektlichtes im rechten Assistentenstrahlengang
- 20a: Neben-Beobachtungsausgang (Assistentenausgang) für monokularen Beobachter (40), links
- 20b: Neben-Beobachtungsausgang (Assistentenausgang) für monokularen Beobachter (40), rechts
- 21a: Haupt-Beobachtungsausgang für Stereobeobachtung für (41), linker Strahlengang
- 21b: Haupt-Beobachtungsausgang für Stereobeobachtung für (41), rechter Strahlengang
- 30: Blenden-Controller (zur Detektion der Position bzw. Stellung und/oder zur Steuerung der Blenden)
- 31: Controller Datentyp-Information mit Speicher und Benutzer-Setup
- 32: Steuerung und Sensorik der Rotationsprismen (zur Detektion der Position bzw. Stellung und/oder zur Steuerung der Prismen)
- 40: Assistent
- 41: Chirurg
- 42: Patient
- 45: Optikträger

## Patentansprüche

1. Stereomikroskop, insbesondere Stereo-Operationsmikroskop, umfassend
- ein Hauptobjektiv (10),
- einen Haupt-Beobachtungsausgang (21a, 21b),
- einen linken und einen rechten Hauptstrahlengang (2a, 2b),
wobei in wenigstens einem der Hauptstrahlengänge vom Hauptobjektiv ausgehend
ein Einspiegelungs-Strahlenteiler (11a, 11b) zur Einblendung von Zusatzinformation und wenigstens ein Ausspiegelungs-Strahlenteiler (12a, 12b)
in dieser Reihenfolge angeordnet sind,
- wenigstens eine erste schaltbare Blende (17a, 17b) zum Abschalten der Objektinformation, die zwischen dem Hauptobjektiv und dem Einspiegelungs-Strahlenteiler (11a, 11b) angeordnet ist,
**dadurch gekennzeichnet, dass**
in wenigstens einem Hauptstrahlengang (2a, 2b) wenigstens eine zweite schaltbare Blende (18a, 18b) zwischen dem Ausspiegelungs-Strahlenteiler (12a, 12b) und dem Haupt-Beobachtungsausgang (21a, 21b) angeordnet ist,
und dass in jedem Hauptstrahlengang (2a, 2b) ein Einspiegelungs-Strahlenteiler (11a, 11b) angeordnet ist.

2. Stereomikroskop nach Anspruch 1, **dadurch gekennzeichnet, dass** zwischen jedem Einspiegelungs-Strahlenteiler (11a, 11b) und dem Hauptobjektiv (10) und jedem Ausspiegelungs-Strahlenteiler (12a, 12b) und dem Haupt-Beobachtungsausgang (21a, 21b) je eine schaltbare erste beziehungsweise zweite Blende (17a, 17b;18a, 18b) angeordnet sind.

3. Stereomikroskop mit wenigstens einem Neben-Beobachtungsausgang (20a, 20b) nach Anspruch 1 oder 2, **dadurch gekennzeichnet, dass** zwischen wenigstens einem Ausspiegelungs-Strahlenteiler (12a, 12b) und dem Neben-Beobachtungsausgang (20a, 20b) eine dritte schaltbare Blende (19a, 19b) angeordnet ist.

4. Stereomikroskop nach Anspruch 3, **dadurch gekennzeichnet, dass** vor jedem Neben-Beobachtungsausgang (20a, 20b) eine dritte schaltbare Blende (19a, 19b) angeordnet ist.

5. Stereomikroskop mit wenigstens zwei Neben-Beobachtungsausgängen (20a, 20b) pro Hauptstrahlengang (2a, 2b), nach einem der Ansprüche 3 oder 4, **dadurch gekennzeichnet, dass** die Neben-Beobachtungsausgänge in der gleichen Radialebene in Bezug auf den Hauptstrahlengang (2a, 2b) liegen und dass der Ausspiegetungs-Strahlenteiler (12a, 12b) drehbar ist, so dass er die Ausspiegelungs-Bildinformation wahlweise dem einen oder anderen Neben-Beobachtungsausgang (20a, 20b) zuführt.

6. Stereomikroskop nach einem der vorhergehenden Ansprüche, **dadurch gekennzeichnet, dass** wenigstens einer der Einspiegelungs-Strahlenteiler (11a, 11b) gleichzeitig auch als Ausspiegelungs-Strahlenteiler ausgebildet ist.

7. Stereomikroskop nach einem der vorhergehenden Ansprüche, **dadurch gekennzeichnet, dass** beiden Einspiegelungs-Strahlenteilern (11a, 11b) in den beiden Hauptstrahlengängen (2a, 2b) ein gemeinsamer Einspiegelungs-Strahlengang (3) zugeordnet ist, der wahlweise dem einen oder anderen oder beiden Einspiegelungs-Strahlenteiler (11a, 11b) zuschaltbar ist.

8. Stereomikroskop nach Anspruch 7, **dadurch gekennzeichnet, dass** der Einspiegelungs-Strahlengang (3) ein Umlenkprisma (14) umfasst, das - vorzugsweise dreh- oder schwenkbar - wahlweise dem linken oder rechten Hauptstrahlengang (2a, 2b) zuordenbar ist.

9. Stereomikroskop nach einem der vorhergehenden Ansprüche, **dadurch gekennzeichnet, dass** wenigstens ein Teil der Blenden (17,18,19) mit einer Steuereinrichtung (30, 31, 32) verbunden ist, die im Betriebszustand wenigstens einen Teil der Blenden (17, 18, 19) anhand von applikations- und/oder benutzerspezifischen Gesichtspunkten schliesst oder öffnet.

10. Stereomikroskop nach Anspruch 9, **dadurch gekennzeichnet, dass** wenigstens ein Stellungs- oder Positionsdetektor (30, 32) vorgesehen ist, der im Betriebszustand die Stellung oder Position der Ausspiegelungsprismen (12a, 12b) und/oder des Umlenkprismas (14) und/oder der Blenden (17, 18, 19) erfasst und mit der Steuereinrichtung verbunden ist und die Blendensteuerung entsprechend ausrichtet.

11. Stereomikroskop nach einem der Ansprüche 9 oder 10, **dadurch gekennzeichnet, dass** die Steuereinrichtung (30, 31, 32) mit einer Steuerung für die eingespiegelte Zusatzinformation verbunden ist, um in Abhängigkeit von der jeweiligen Stellung der Ausspiegelungsprismen (12a, 12b) und/oder des Umlenkprismas (14) und/oder der jeweiligen Blendenstellung und/oder der jeweiligen Beobachterwünsche das über ein Display (16) eingespiegelte Bild zu beeinflussen.

12. Stereomikroskop nach einem der Ansprüche 9 bis 11, **dadurch gekennzeichnet, dass** die Steuereinrichtung wenigstens einen Blenden-Controller (30), wenigstens einen Controller mit Speicher für Datentyp-Information und Benutzer-Setup (31) und/oder wenigstens eine Steuerung und Sensorik für die Position der Ausspiegelungs-Strahlenteiler (12a, 12b) und/oder des Umlenkprismas (14) umfasst.

13. Stereomikroskop nach einem der Ansprüche 9 bis 12, **dadurch gekennzeichnet, dass** die Steuereinrichtung automatisch und/oder manuell einstellbar ist.

14. Stereomikroskop im Verbund mit einem stereotaktischen Operations-Aufbau und einer bildgesteuerten Operationssteuerungseinrichtung, nach einem der Ansprüche 9 bis 13, **dadurch gekennzeichnet, dass** die Steuereinrichtung (30, 31, 32) mit der Operationssteuerungseinrichtung verbunden ist und im Betriebszustand wenigstens den Einblendezustand in den linken oder rechten Hauptstrahlengang (2a, 2b) signalisiert.

## Claims

1. Stereomicroscope, in particular stereo surgical microscope, comprising
- a main objective (10),
- a main observation output (21a, 21b),
- a left and a right main beam path (2a, 2b), an input beam splitter (11a, 11b) for inserting additional information and at least one output beam splitter (12a, 12b)
being arranged in this sequence in at least one of the main beam paths, starting from the main objective,
- at least one first switchable shutter (17a, 17b) for switching off the object information, which is arranged between the main objective and the input beam splitter (11a, 11b),
**characterized in that** at least one second switchable shutter (18a, 18b) is arranged between the output beam splitter (12a, 12b) and the main observation output (21a, 21b) in at least one main beam path (2a, 2b), and **in that** an input beam splitter (11a, 11b) is arranged in each main beam path (2a, 2b).

2. Stereomicroscope according to Claim 1, **characterized in that** one switchable first or second shutter (17a, 17b; 18a, 18b) each is arranged between each input beam splitter (11a, 11b) and the main objective (10) and each output beam splitter (12a, 12b) and the main observation output (21a, 21b).

3. Stereomicroscope having at least one secondary observation output (20a, 20b) according to Claim 1 or 2, **characterized in that** a third switchable shutter (19a, 19b) is arranged between at least one output beam splitter (12a, 12b) and the secondary observation output (20a, 20b).

4. Stereomicroscope according to Claim 3, **characterized in that** a third switchable shutter (19a, 19b) is arranged in front of each secondary observation output (20a, 20b).

5. Stereomicroscope having at least two secondary observation outputs (20a, 20b) per main beam path (2a, 2b), according to either of Claims 3 and 4, **characterized in that** the secondary observation outputs are in the same radial plane in relation to the main beam path (2a, 2b), and **in that** the output beam splitter (12a, 12b) is rotatable so that it supplies the output image information selectively to one or other secondary observation output (20a, 20b).

6. Stereomicroscope according to any of the preceding Claims, **characterized in that** at least one of the input beam splitters (11a, 11b) is simultaneously also designed as an output beam splitter.

7. Stereomicroscope according to any of the preceding Claims, **characterized in that** both input beam splitters (11a, 11b) in the two main beam paths (2a, 2b) are assigned a common input beam path (3) which can be selectively switched to one or other input beam splitter (11a, 11b) or to both input beam splitters (11a, 11b).

8. Stereomicroscope according to Claim 7, **characterized in that** the input beam path (3) comprises a deflection prism (14) which - preferably rotatably or pivotably - can optionally be assigned to the left or right main beam path (2a, 2b).

9. Stereomicroscope according to any of the preceding Claims, **characterized in that** at least some of the shutters (17, 18, 19) are connected to a control device (30, 31, 32) which, in the operating state closes or opens at least some of the shutters (17, 18, 19) on the basis of application and/or user-specific points of view.

10. Stereomicroscope according to Claim 9, **characterized in that** at least one attitude or position detector (30, 32) is provided which, in the operating state, detects the attitude or position of the output reflecting prisms (12a, 12b) and/or of the deflection prism (14) and/or of the shutters (17, 18, 19) and is connected to the control device and appropriately aligns the shutter control.

11. Stereomicroscope according to either of Claims 9 and 10, **characterized in that** the control device (30, 31, 32) is connected to a control for the input additional information in order, as a function of the respective attitude of the output reflecting prisms (12a, 12b) and/or of the deflection prism (14) and/or of the respective shutter attitude and/or of the respective observer's wishes, to influence the input image via a display (16).

12. Stereomicroscope according to any of Claims 9 to 11, **characterized in that** the control device comprises at least one shutter controller (30), at least one controller having a memory for data type information and user setup (31) and/or at least one control and sensor system for the position of the output beam splitters (12a, 12b) and/or of the deflection prism (14).

13. Stereomicroscope according to any of Claims 9 to 12, **characterized in that** the control device is automatically and/or manually adjustable.

14. Stereomicroscope in combination with a stereotactic surgical setup and an image-controlled surgery control device, according to any of Claims 9 to 13, **characterized in that** the control device (30, 31, 32) is connected to the surgery control device and, in the operating state, indicates at least the insertion state into the left or right main beam path (2a, 2b).

## Revendications

1. Microscope stéréoscopique, particulièrement microscope stéréoscopique d'opération, comprenant
- un objectif principal (10),
- une sortie principale d'observation (21a, 21b),
- une marche gauche principale des rayons et une marche principale des rayons droite (2a, 2b)
au moins une des marche principaux des rayons, à partir de l'objectif principal, incluant
un élément de fractionnement des rayons mélangeant (11a, 11b) pour mélanger une information additionnelle, et au moins un élément de fractionnement des rayons réfléchissant en dehors (12a, 12b)
dans cet ordre,
- au moins un premier diaphragme embrayable (17a, 17b) pour interrompre l'information d'objet, qui est disposé entre l'objectif principal et l'élément de fractionnement des rayons mélangeant (11a, 11b),
**caractérisé en ce, que**
dans au moins une marche principale des rayons (2a, 2b), au moins un deuxième diaphragme embrayable (18a, 18b) est disposé entre l'élément de fractionnement des rayons réfléchissant en dehors (12a, 12b) et la sortie principale d'observation (21a, 21b),
et qu'un élément de fractionnement des rayons mélangeant (11a, 11b) est disposé dans chaque marche principale des rayons (2a, 2b).

2. Microscope stéréoscopique selon la revendication 1, **caractérisé en ce, qu'**un, premier et un deuxième diaphragme (17a, 17b; 18a, 18b) respectif embrayable sont disposés entre chaque élément de fractionnement des rayons mélangeant (11a, 11b) et l'objectif principal (10), et entre chaque élément de fractionnement des rayons réfléchissant en dehors (12a, 12b) et la sortie principale d'observation (21a, 21b).

3. Microscope stéréoscopique comprenant au moins une sortie secondaire d'observation (20a, 20b), selon la revendication 1 ou 2, **caractérisé en ce, qu'**un troisième diaphragme embrayable (19a, 19b) est disposé entre au moins un élément de fractionnement des rayons réfléchissant en dehors (12a, 12b) et la sortie secondaire d'observation (20a, 20b).

4. Microscope stéréoscopique selon la revendication 3, **caractérisé en ce, qu'**un troisième diaphragme embrayable (19a, 19b) est disposé devant chaque sortie secondaire d'observation (20a, 20b).

5. Microscope stéréoscopique comprenant au moins deux sorties secondaires d'observation (20a, 20b) par marche principale des rayons (2a, 2b), selon une quelconque des revendications 3 ou 4, **caractérisé en ce, que** les sorties secondaires d'observation sont disposées dans le même plan radial par rapport à la marche principal des rayons (2a, 2b), et que l'élément de fractionnement des rayons réfléchissant en dehors (12a, 12b) est rotatif de manière, qu'il admet l'information d'image réfléchie en dehors sélectivement à l'une ou l'autre sortie secondaire d'observation (20a, 20b).

6. Microscope stéréoscopique selon une quelconque des revendications précédentes, **caractérisé en ce, qu'**au moins un des éléments de fractionnement des rayons mélangeants (11a, 11b) est formé en même temps aussi comme un élément de fractionnement des rayons réfléchissant en dehors.

7. Microscope stéréoscopique selon une quelconque des revendications précédentes, **caractérisé en ce, qu'**une marche mélangeante des rayons (3) est associée en commun aux deux éléments de fractionnement des rayons mélangeants (11a, 11b) dans les deux marches principaux des rayons (2a, 2b), et peut être embrayée à l'un ou l'autre éléments de fractionnement des rayons mélangeants (11a, 11b) ou bien à tout les deux.

8. Microscope stéréoscopique selon la revendication 7, **caractérisé en ce, que** la marche mélangeante des rayons (3) comprend un prisme déviateur (14), qui est de préférence rotatif ou pivotant, pouvant être associé sélectivement à la marche principale des rayons gauche ou droite (2a, 2b).

9. Microscope stéréoscopique selon une quelconque des revendications précédentes, **caractérisé en ce, qu'**au moins une partie des diaphragmes (17, 18, 19) est reliée à un dispositif de commande (30, 31, 32), qui en état de service ferme ou ouvre au moins une partie des diaphragmes (17, 18, 19) selon des points de vue spécifiques de l'application et/ou de l'utilisateur.

10. Microscope stéréoscopique selon la revendication 9, **caractérisé en ce, qu'**au moins un capteur de position (30, 32) est prévu, qui en état de service détermine la position des prismes de réflexion en dehors (12a, 12b) et/ou du prisme déviateur (14) et/ou des diaphragmes (17, 18, 19), et est relié au dispositif de commande et oriente la commande de diaphragme en correspondance.

11. Microscope stéréoscopique selon une quelconque des revendications 9 ou 10, **caractérisé en ce, que** le dispositif de commande (30, 31, 32) et relié à un réglage pour l'information additionnelle réfléchie à être introduite, pour influencer l'image réfléchie d'un display (16) en fonction de la position respective des prismes de réflexion en dehors (12a, 12b) et/ou du prisme déviateur (14) et/ou de la position respective de diaphragme et/ou des souhaits respectifs de l'observateur.

12. Microscope stéréoscopique selon une quelconque des revendications 9 à 11, **caractérisé en ce, que** le dispositif de commande comprend au moins un contrôleur de diaphragmes (30), au moins un contrôleur ayant un mémoire pour l'information de type de données et pour le set-up (31) d'un utilisateur et/ou au moins un réglage et les capteurs pour la position des éléments de fractionnement des rayons réfléchissant en dehors (12a, 12b) et/ou du prisme déviateur (14).

13. Microscope stéréoscopique selon une quelconque des revendications 9 à 12, **caractérisé en ce, que** le dispositif de commande est ajustable automatiquement et/ou manuellement.

14. Microscope stéréoscopique relié à un ensemble d'opération stéréotactique et à un dispositif de commande d'opération commandé par des images, selon une quelconque des revendications 9 à 13, **caractérisé en ce, que** le dispositif de commande (30, 31, 32) est relié au dispositif de commande d'opération et signale, en état de service, au moins l'état de réflexion mélangeant dans la marche principale des rayons gauche ou droite (2a, 2b).
